# EUROPEAN PATENT APPLICATION

(11) **EP 2 918 821 A1**
(43) Date of publication of application: **16.09.2015**
(21) Application number: 13845464.0
(22) Date of filing: 04.10.2013
(51) Int. Cl.: F02P 17/12

(54) **ENGINE CONTROL SYSTEM**

(30) Priority: 11.10.2012 JP 2012226129
(71) Applicant: Hitachi Automotive Systems, Ltd., Hitachinaka-shi Ibaraki 312-8503 (JP)
(72) Inventor: KUMANO Kengo, Tokyo 100-8280 (JP); AKAGI Yoshihiko, Hitachinaka-shi Ibaraki 312-0062 (JP)
(74) Representative: MERH-IP Matias Erny Reichl Hoffmann
(86) International application number: PCT/JP2013/077023
(87) International publication number: WO 2014/057870

(57) **Abstract**

Accurate detection of abnormal combustion is enabled even in an engine in which a combustion chamber has only one ignition plug provided with an ion-current detection function. An engine control system according to the invention is provided with an ion detector(4) for detecting ions generated during combustion, and a control unit (20) including a combustion-state determination unit for determining on whether the combustion state of the engine is either a normal combustion or an abnormal combustion on the basis of a time-length (Δt) from a fall-time of an ignition-control signal (4h) to a rise-time of an ion-signal (4g) outputted from the ion detector.

## Description

### [Technical Field]

The invention relates to an engine control system.

### [Background Art]

An attempt has lately been made to improve thermal efficiency of an engine in order to enhance the fuel economy of an automobile. One of the technologies for improvement is to achieve a higher compression ratio. If a compression ratio is raised, this will cause a theoretical thermal efficiency of an internal combustion engine to be enhanced. Meanwhile, progress has since been made in development in terms of downsizing of an engine, as well, under a policy for enhancement in the fuel economy. The downsizing enables reduction in pumping loss as well as mechanical loss. However, there is necessity to increase a boost pressure in order to maintain a torque (an output) of such an engine as downsized.

In the case of an engine system high in compression-ratio, and supercharging, temperature in the combustion chamber of an engine goes up, so that an abnormal combustion, that is, a so-called pre-ignition, will pose a problem. The pre-ignition is meant by a phenomenon in which ignition of an air-fuel mixture occurs prior to a spark discharge caused by an ignition plug. Occurrence of the pre-ignition will result in a state in which a combustion control by the ignition cannot be effected, thereby leading to the runaway of an engine. Further, there is a possibility that the engine is damaged due to an abrupt rise in cylinder pressure.

Furthermore, there is a possibility that a phenomenon seen as a precursor of the pre-ignition occurs prior to the occurrence of the pre-ignition. More specifically, there can arise a phenomenon in which the ignition of an air-fuel mixture occurs earlier than the normal combustion although after a spark discharge caused by the ignition plug (this is referred to as "pre-ignition precursory combustion" hereinafter in the present description). Accordingly, it is important to detect the precursory phenomenon of the pre-ignition, that is, the pre-ignition precursory phenomenon, before the occurrence of a full-fledged pre-ignition, thereby preemptively avoid the pre-ignition.

There has been proposed a technique of using an ion-current detector (ion detector) sensor as a method for detecting the pre-ignition and the pre-ignition precursory combustion (either thereof being an abnormal combustion). Detection of an ion generated at the time of combustion by use of the ion-current detector enables a combustion time in each cycle to be detected.

There has been proposed a system in which a spark plug is used for a probe, serving as a practicable ion-current detector. With this system, however, an ion-current cannot be detected during a time period of the spark discharge caused by the ignition plug owing to the principle underlying the system. For this reason, it is not possible to capture combustion in the vicinity of the time period of the spark discharge caused by the ignition plug, so that the system is at a disadvantage in that detection accuracy is low in detection of the pre-ignition or the pre-ignition precursory combustion.

For example, a technology disclosed in Patent Literature 1 is well known as a technology capable of grasping the combustion state of an engine with high accuracy. In Patent Literature 1, there is described the technology whereby two ignition plugs, each thereof being provided with an ion-current detection function, are installed in a combustion chamber, and the time periods of the respective spark discharges by the two ignition plugs are staggered from each other, thereby rendering it possible that an ion-current not detectable by one of the ignition plugs is detected by the other ignition plug.

### [Citation List]

### [Patent Literature]

[Patent Literature 1] Japanese Patent Laid-open No. 2009-85173

### [Summary of Invention]

### [Technical Problem]

With the technology described in Patent Literature 1, however, it is indispensable that the two ignition plugs, each thereof being provided with the ion-current detection function, be provided in the combustion chamber, so that the technology has a problem with the need for a large-scale change in layout of the combustion chamber of an engine, and an increase in cost.

The present invention has been developed to solve the problem described as above, and it is an object of the invention to provide an engine control system capable of detecting an abnormal combustion with high accuracy, while controlling an increase in cost.

### [Solution to Problem]

To achieve the object, in accordance with the present invention, there is provided an engine control system including an ion detector (4) for detecting ions generated at the time of combustion, and an engine control unit (20) provided with a combustion-state determination unit for determining whether the combustion state of the engine is either a normal combustion or an abnormal combustion on the basis of a time-length (Δt) from a fall-time point of an ignition-control signal of the engine to a rise-time point of an ion signal outputted from the ion detector.

### [Advantageous Effects of Invention]

According to the present invention, it becomes possible to preemptively prevent occurrence of abnormal combustion without a large-scale change in engine layout, and an increase in cost. Further, the above and other problems, configurations, and effects of the present invention will be apparent from the following detailed description of the preferred embodiments of the invention, and working examples.

### [Brief Description of Drawings]

Fig. 1 is a system block diagram of an engine, with an engine control system according to an embodiment of the present invention applied thereto.
Fig. 2 is a view showing an ignition system as a constituent of the engine control system according to the embodiment of the present invention, in detail.
Fig. 3 is a view showing a representative example of a relationship between an ignition-control signal and a heat release rate, accompanying a lapse of time, in the engine shown in Fig. 1.
Fig. 4 is a view showing a relationship between the ignition-control signal and an ion-signal, after an elapse of time, on the basis of data of a test conducted on the engine shown in Fig. 1.
Fig. 5 is a view prepared by plotting a relationship between an integration value of ion-signals and a combustion-start time, on the basis of the data of the test conducted on the engine shown in Fig. 1.
Fig. 6 is a view prepared by plotting a relationship between a time-length Δt from an ignition-control signal fall-time point to an ion-signal rise-time point and the combustion-start time, on the basis of the data of the test conducted on the engine shown in Fig. 1.
Fig. 7 is a block diagram showing an electrical configuration of the engine control system according to the embodiment of the present invention.
Fig. 8 is a view showing the gist of a determination on pre-ignition precursory combustion, and avoidance-control logic, in Working Example 1 of an engine control system according to the embodiment of the present invention.
Fig. 9 is a flow chart showing a procedure for the determination on the pre-ignition precursory combustion, and avoidance-control, in Working Example 1 of the engine control system according to the embodiment of the present invention.
Fig. 10 is a time chart for pre-ignition precursory combustion determination, and avoidance-control, in Working Example 1 of the engine control system according to the embodiment of the present invention.
Fig. 11 is a view showing the gist of the determination on the pre-ignition, and avoidance-control logic, in Working Example 2 of an engine control system according to the embodiment of the present invention.
Fig. 12 is a flow chart showing a procedure for the determination on the pre-ignition, and avoidance-control, in Working Example 2 of the engine control system according to the embodiment of the present invention.
Fig. 13 is a time chart for the determination on the pre-ignition, and avoidance-control, in Working Example 2 of the engine control system according to the embodiment of the present invention.
Fig. 14 is a view showing an ignition system as a constituent of the engine control system according to the embodiment of the invention, in detail.
Fig. 15 is a view showing a relationship between the ignition-control signal and a secondary electric-current signal after an elapse of time on the basis of data of the test conducted on the engine shown in Fig. 1.
Fig. 16 is a block diagram showing an electrical configuration of an engine control system according to an embodiment of the present invention.
Fig. 17 is a view showing the gist of a determination on pre-ignition precursory combustion, and the avoidance-control logic.
Fig. 18 is a flow chart showing a procedure for the determination on the pre-ignition precursory combustion, and avoidance-control. Fig. 19 is a time chart forpre-ignition precursory combustion determination, and avoidance-control.

### [Description of Embodiments]

Embodiments of an engine control system according to the present invention are described below with reference to the accompanying drawings.

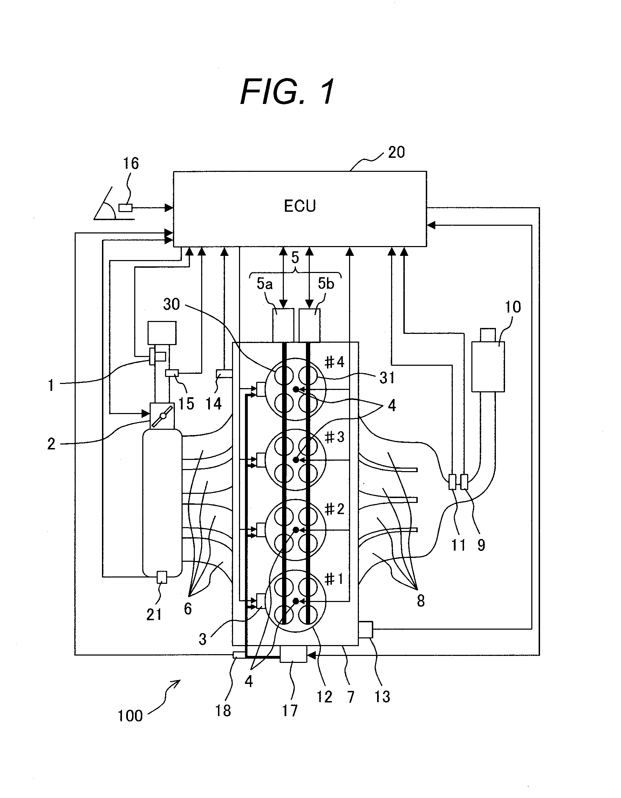

Fig. 1 is a system block diagram of an automobile direct injection gasoline engine, with an engine control system according to an embodiment of the present invention applied thereto.

The engine control system according to the present invention includes at least an ignition system 4, and an engine control unit (ECU) 20. An engine 100 is a four-cylinder gasoline engine for use in an automobile, spark-ignition combustion being carried out therein, as shown in Fig. 1. An air-flow sensor 1 for measuring an intake air flow, an electronic controlled throttle 2 for adjusting a pressure in an intake pipe 6, an intake-air temperature sensor 15 for measuring an intake-air temperature as one form of an intake-air temperature detector, and an intake-pressure sensor 21 for measuring a pressure in the intake pipe 6 are provided at respective positions as appropriate on the intake-air side of the engine.

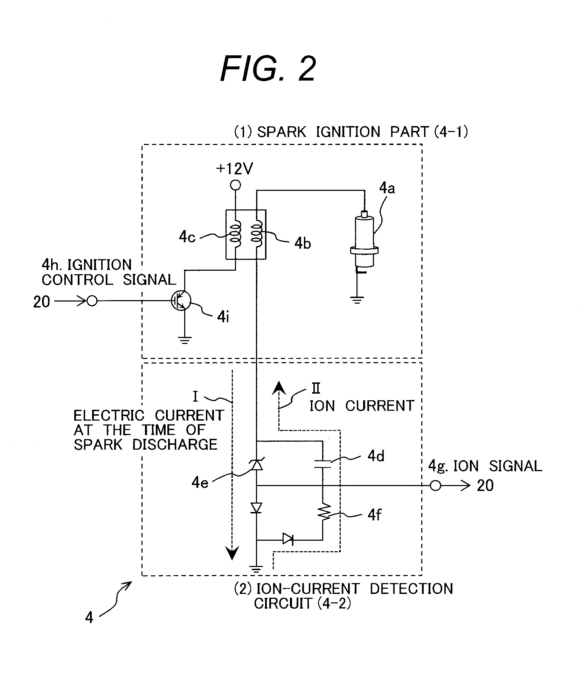

Further, a fuel injection device (hereinafter referred to as "an injector") 3 for injecting fuel into a combustion chamber 12, and an ignition system 4 for supplying ignition energy are provided on a cylinder-by-cylinder basis inside the engine 100. Herein, the ignition system 4 is provided with an ion-current detection circuit (an ion detector) (4-2) (refer to Fig. 2) for detecting an ion current at the time of combustion. Further, a cooling-water temperature sensor 14 for measuring the temperature of an engine cooling-water is provided at an appropriate position on a cylinder head 7.

Still further, a variable valve 5 is provided at an appropriate position of a cylinder head 7, the variable valve 5 being made up of an intake-valve variable device 5a for adjusting an intake gas flowing into the cylinder, and an exhaust-valve variable device 5b for adjusting an exhaust gas ejected from inside the cylinder. An intake volume of all the cylinders, in a range of the cylinder No. 1 (#1) through the cylinder No. 4 (#4), together with an EGR (Exhaust Gas Recirculation) volume, can be adjusted by adjustment of the variable valve 5. Further, a high-pressure fuel pump 17 for supplying a fuel injector 3 with a high-pressure fuel is connected to the fuel injector 3 via fuel piping. A fuel-pressure sensor 18 for measuring a fuel injection pressure is provided in the fuel piping.

Further, a three-way catalyst 10 for cleaning up an exhaust gas, an air-fuel ratio sensor 9 for detecting an air-fuel ratio on the upstream side of the three-way catalyst 10, as one form of an air-fuel ratio detector, and an exhaust-gas temperature sensor 11 for measuring the temperature of an exhaust gas on the upstream side of the three-way catalyst 10, as one form of an exhaust gas temperature detector, are provided at respective positions as appropriate, inside an exhaust gas pipe 8. Still further, a crankshaft (not shown) is provided with a crankshaft angle sensor 13 for calculating a turning angle.

Signals received from the air-flow sensor 1, the air-fuel ratio sensor 9, the cooling-water temperature sensor 14, the intake-air temperature sensor 15, the exhaust-gas temperature sensor 11, the crankshaft angle sensor 13, the fuel-pressure sensor 18, the intake-pressure sensor 21, the ignition system (an ion-signal detection circuit) 4, and the variable valve (a phase angle sensor) 5, respectively, are sent out to the engine control unit (ECU) 20, functioning as a controller. Further, a signal received from an accelerator-opening sensor 16 is sent out to the ECU 20.

The accelerator-opening sensor 16 detects an accelerator-pedal depression extent, that is, an accelerator-opening. The ECU 20 computes a required torque on the basis of an output signal from the accelerator-opening sensor 16. In other words, the accelerator-opening sensor 16 is used as a required-torque detection sensor for detecting a required-torque against the engine. Then, the ECU 20 computes a revolution speed of the engine on the basis of an output-signal from the crankshaft angle sensor 13. Further, the ECU 20 optimally computes primary working-volumes of the engine, such as an air-flowvolume, a fuel injection volume, an ignition-time, a fuel pressure, and so forth, on the basis of the operation state of the engine, as obtained from the respective outputs of various types of the sensors.

The fuel-injection volume computed by the ECU 20 is converted into an open-valve pulse signal to be sent out to the injector 3. Further, the ignition-signal 4h is sent out to the ignition system 4 so that ignition occurs at the ignition-time computed by the ECU 20. Still further, a throttle opening computed by the ECU 20, serving as a throttle-drive signal, is sent out to the electronic controlled throttle 2. Yet further, the working volume of the variable valve, computed by the ECU 20, serving as a variable-valve drive signal, is sent out to the variable valve 5. Furthermore, the fuel-pressure computed by the ECU 20, serving as a high-pressure fuel-pump drive-signal, is sent out to the high-pressure fuel pump 17.

Fuel is injected against an air flowing from the intake pipe 6 into the combustion chamber 12 through an intake-valve 30, thereby forming an air-fuel mixture. The air-fuel mixture undergoes an explosion by sparks generated from ignition plugs 4 at a predetermined ignition-time, and a piston is pushed down by a combustion pressure due to the explosion, thereby producing a driving force of the engine. Further, the exhaust gas after the explosion flows through the exhaust-gas pipe 8 via an exhaust valve 31 to be subsequently sent to the three-way catalyst 10, and then exhaust-gas components are cleaned up in the three-way catalyst 10 to be subsequently ejected to the outside.

Fig. 2 is a view showing an ignition system 4 as a constituent of the engine control system according to the embodiment of the present invention, in detail. The ignition system 4 is made up of a spark ignition part (4-1) and the ion-current detection circuit (an ion detector) (4-2). Upon the ignition-control signal 4h being delivered from the ECU 20, an electric current flows to a primary ignition coil 4c via an igniter 4i. At a time when the ignition signal is turned OFF, and the electric current on the primary side of the spark ignition part is stopped, an electromotive force is generated at a secondary ignition coil 4b, and a high voltage is impressed to the respective tips of the ignition plugs 4a, thereby causing a spark discharge to occur. At the time of the spark discharge, the electric current flows in a direction indicated by the arrow I in Fig. 2. When a voltage of the secondary ignition coil 4b decreases so as to be lower than the breakdown voltage (for example, 100V) of a Zener diode 4e, the electric current flows into a capacitor 4d, where the capacitor 4d is charged with an electric charge.

The spark discharge causes a flame kernel to be generated in a gap between the ignition plugs (a gap between a center electrode and a ground electrode), and thereafter, a flame is propagated throughout the combustion chamber 12. In a flame zone, there exist ions, such as a chemical ion, a thermal ion, etc., as an intermediate product of a combustion process. At this point in time, a voltage (in this case, 100V) is impressed on the ignition plugs 4a by the action of the capacitor 4d that is charged at the time of the spark discharge, so that a cation (and an electron) in the combustion chamber 12 is captured by the voltage, and then an ion current flows in the circuit (in a direction indicated by II in Fig. 2). This ion current is subjected to voltage conversion by a voltage-conversion resistor 4f, after which the ion current, serving as an ion-signal 4g, is sent out to the ECU 20.

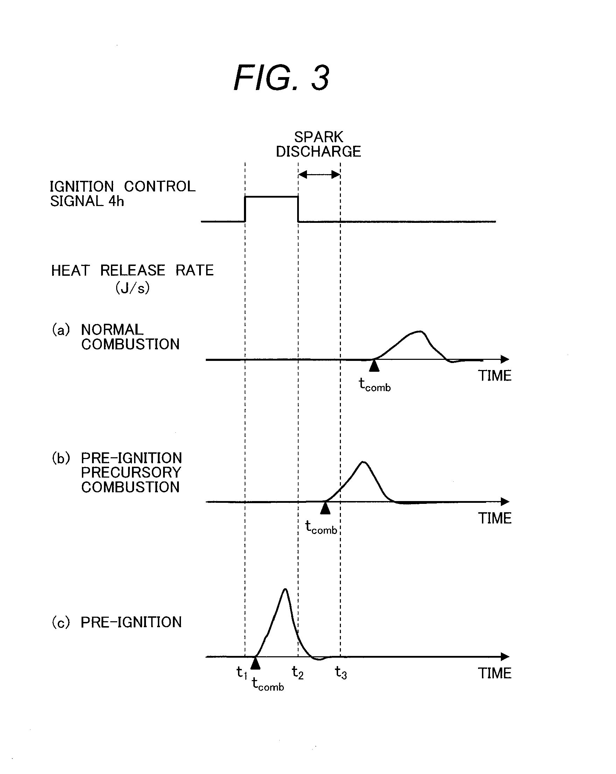

Next, referring to Figs. 3 through 6, there is described below the principle underlying a technique for detection of the pre-ignition and the pre-ignition precursory combustion in the case of the engine control system according to the embodiment of the present invention. Fig. 3 is a view showing a representative example of a relationship between an ignition-control signal and a heat release rate, accompanying a lapse of time, in the engine shown in Fig. 1. There are shown respective examples of the heat release rates at the time of normal combustion, at the time of the pre-ignition precursory combustion, and at the time of the pre-ignition, respectively. Further, the unit of the heat release rate is (joule/sec).

As shown in Fig. 3, the ignition-control signal 4h rises at a time t₁, and then the ignition coil is charged with energy. The ignition-control signal 4h falls at a time t₂, then a high voltage is generated at the secondary ignition coil, and a spark discharge starts. Thereafter, the spark discharge lasts up to a time t₃.

At the time of (a) the normal combustion, combustion occurs with the spark discharge functioning as a trigger, so that the combustion starts at a time t_{Comb} after a time t₃ when the spark discharge is completed. On the other hand, at the time of (c) the pre-ignition, combustion starts due to self-ignition of an air-fuel mixture, caused by an increase in temperature inside the combustion chamber, so that the combustion starts prior to a time t₂ when the spark discharge starts. Now, assuming the case where a combustion state shifts from (a) the normal combustion toward (c) the pre-ignition, and (b) a pre-ignition precursory combustion exists therebetween, note is taken on the pre-ignition precursory combustion. At the time of (b) the pre-ignition precursory combustion, the combustion starts after the time t₂ when the spark discharge starts (that is, although the combustion occurs with the spark discharge acting as a trigger), so that there can be the case where a combustion-start time is earlier as compared with case of the normal combustion, and the combustion starts before the time t₃ when the spark discharge is completed.

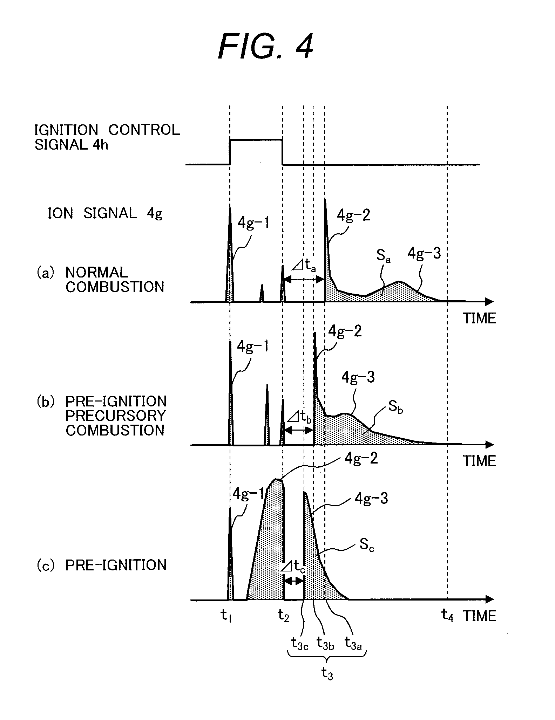

A test was conducted on the engine shown in Fig. 1, and Fig. 4 is a view showing a relationship between an ignition-control signal and the ion-signal, after an elapse of time, on the basis of data of the test. With respect to the ion-signal 4g, there are shown examples thereof at the time of normal combustion, at the time of the pre-ignition precursory combustion, and at the time of the pre-ignition, respectively, as is the case with the heat release rate shown in Fig. 3. Fig. 4 shows the results of the test conducted on condition that the engine speed is 1000 rpm, a throttle position is fully open, and an effective compression ratio is 10. 3.

First, there is described a characteristic of the ion-signal 4g generated subsequent to the combustion at the time of (a) the normal combustion. The ion-signal 4g has the characteristic of three peaks appearing in the waveform thereof. A first peak 4g-1 of the ion-signal 4g represents a waveform seen in the case where the ion-current detection circuit 4-2 (refer to Fig. 2) is incorporated in the ignition system 4. The first peak 4g-1 is formed upon an electric current flowing to the ion-current detection circuit 4-2 at the time when the ignition-control signal 4h is delivered at the time t₁, thereby outputting the ion-current as the ion-signal 4g. Because this takes place at a time when a combustion flame does not actually exist, the ECU 20 treats the first peak 4g - 1 of the ion-signal 4g as noise.

A second peak 4g - 2 of the ion-signal 4g is a signal as seen after the ignition-control signal 4h is cut off at the time t₂, with a spark flying between a gap of the ignition plugs 4a, and after a lapse of spark-discharge time Δt. The second peak 4g - 2 is formed due to an ion-component in a flame in the initial period of the combustion and a noise-component accompanying the discharge being concurrently detected. In this case, the ion-signal cannot be detected by the ion-current detection circuit 4-2 during a time period of the spark discharge in the gap (a spark-discharge period: t₂ to t₂ + Δt).

Athirdpeak 4g - 3 of the ion-signal 4gis a waveform detected in the process of a combustion flame spreading out throughout the combustion chamber 12, the waveform being also in good agreement with a pressure-waveform as well as a heat-production waveform, inside the combustion chamber 12. This third peak 4g - 3 is formed due to detection of the ion component in the flame of the main portion of the combustion.

At a time when the pre-ignition occurs, first a change appears in the third peak 4g - 3. There is observed a tendency that an occurrence-time of the third peak 4g - 3 is brought forward following advance in heat-release time (refer to Fig. 3) in the case of the combustion state shifting from (a) the normal combustion toward (b) the pre-ignition precursory combustion, and (c) the pre-ignition, successively, while gradually increasing a peak value. Accordingly, there is a tendency that the value S (corresponding to a dark-shaded area in the figure) obtained by integration (summation) of the ion-signals in a time range of from a prescribed time t₁ (for example, 90 deg. BTDC) of a compression stroke to a prescribed time t₄ (for example, 90 deg. ATDC) of an expansion stroke will increase in ascending order of the normal combustion, the pre-ignition precursory combustion, and the pre-ignition (Sₐ < S_{b} < S_{c}).

This is attributable to earlier generation of the ion-signal due to combustion-time being brought forward, and a rise in temperature inside the combustion chamber 12 due to advance in the combustion-time, thereby promoting generation of ions (mainly, the thermal ions) and increasing the energy of the ion-signal.

Further, as one more variation, there is observed a tendency that time-length Δt from the fall time t₂ of the ignition-control signal up to the time t₃ (t₃ₐ, t_{3b}, t_{3c}) when the ion-signal rises becomes shorter in the order of the normal combustion, the pre-ignition precursory combustion, and the pre-ignition (Δt ₐ >Δt _{b} > Δt _{c}). Herein, it is noted that Δt means the spark discharge time itself. At the time of the pre-ignition precursory combustion, the combustion-time is brought forward as compared with the case of the normal combustion, so that combustion starts during the spark discharge.

If the combustion starts during the spark discharge, a pressure as well as temperature in the gap between the ignition plugs abruptly rises, so that a high discharge-voltage is required and a discharge-voltage is turned higher. Accordingly, spark-ignition-time is shortened. Similarly, in the case of the pre-ignition, majority of the air-fuel mixture has already undergone combustion at the time of the spark-discharge, so that a pressure as well as temperature in the gap between the ignition plugs is high, thereby shortening the spark-ignition-time. The above explains about a mechanism whereby the time Δt becomes shorter in the order of the normal combustion, the pre-ignition precursory combustion, and the pre-ignition.

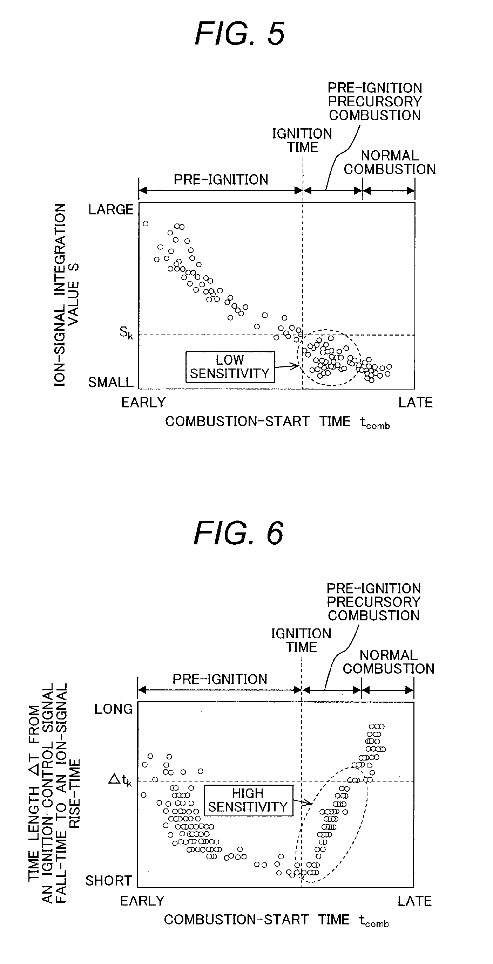

A test was conducted on the engine shown in Fig. 1, under the test condition described as above (that is, the engine speed : 1000 rpm, the throttle position: fully open, the effective compression ratio: 10.3), and Fig. 5 is a view prepared by plotting a relationship between an integration value of ion-signals and a combustion-start time, based on the test data. In a graph, the horizontal axis indicates a combustion-start time, that is, an index value of the pre-ignition, and the vertical axis indicates an integration value S of the ion-signals. At the time of the normal combustion, combustion starts after given delay-time from the ignition-time (= the fall time of the ignition-control signal). In the case of the pre-ignition precursory combustion, a time interval from the ignition-time to a combustion-start time is shortened as described in the foregoing, and in the case of the pre-ignition, combustion is started prior to the ignition-time.

Upon observation of the integration value S of the ion-signals, there can be seen a tendency that the integration value S of the ion-signals will increase in value as the combustion state shifts from the normal combustion toward the pre-ignition precursory combustion,however,a region (a region of low sensitivity) where it is difficult to discriminate between the normal combustion and the pre-ignition precursory combustion on the basis of the integration value S of the ion-signals alone exists in the vicinity of the boundary between the normal combustion and the pre-ignition precursory combustion, as shown in Fig. 5. Accordingly, it is difficult to discriminate between the normal combustion and the pre-ignition precursory combustion with high accuracy on the basis of the integration value S of the ion-signal, alone.

This is presumed attributable to the ability of the system of detecting only a portion of generated ions as signals because the combustion starts during the time period of the spark discharge at the time of the pre-ignition precursory combustion, and the inability of the system of detecting the ion-signal during the time period of the spark discharge. Further, it is possible to discriminate between the normal combustion and the pre-ignition precursory combustion by use of a determination-threshold Δ tₖ, as described later on.

Meanwhile, if the integration value S of the ion-signals is used, it is possible to select whether or not the combustion state of the engine is the pre-ignition or the combustion state of the engine is either the normal combustion or the pre-ignition precursory combustion. If, for example, a determination-threshold is set to Sₖ (a second threshold), it is possible to make a determination (an identification) by differentiating between the pre-ignition and other combustion states. More specifically, if the integration value S of the ion-signals is larger than the determination-threshold Sₖ, the pre-ignition can be identified, whereas if the integration value S of the ion-signals is smaller than the determination-threshold Sₖ, either the pre-ignition precursory combustion or the normal combustion can be identified.

Furthermore, for an energy value of the ions, the integration value of the ion-signals is used, however, other values besides the integration value, such as a time period over which the ion-signal 4g was detected, or the peak value of the ion-signal 4g may be used. A decision on which value is to be used may be made as appropriate according to the characteristic of the engine, the operation condition thereof, and so forth. No matter whichever of the ion energy values is used, it is possible to select whether the combustion state of the engine is the pre-ignition or either of the normal combustion and the pre-ignition precursory combustion.

A test was conducted on the engine shown in Fig. 1, under the test condition described as above (that is, the engine speed: 1000 rpm, the throttle position: fully open, the effective compression ratio: 10. 3), and Fig. 6 is a view prepared by plotting a relationship between a time-length Δt from an ignition-control signal fall-time point to an ion-signal rise-time point and the combustion-start time, based on the test data. In a graph, the horizontal axis indicates the combustion-start time, that is, the index value of the pre-ignition, and the vertical axis indicates the time-length Δt. The same thing as described with reference to Fig. 5 is applicable to the horizontal axis.

Upon observation of Δt, there can be seen a tendency that Δt will become shorter as the combustion state shifts from the normal combustion toward the pre-ignition precursory combustion. This tendency being more pronounced as compared with the case of the integration value S of the ion-signals, in Fig. 5, it is easy (high in sensitivity) to differentiate between the normal combustion and the pre-ignition precursory combustion on the basis of Δt. If, for example, the determination-threshold is set to Δtₖ (a first threshold), it is possible to differentiate between the pre-ignition precursory combustion and the normal combustion. Further, it is evident from Fig. 6 that as the combustion-start time is moved up earlier (the start time of the pre-ignition is brought forward) in the region of the pre-ignition, so Δt will become conversely longer. It is reasoned that this is attributable to an increase in heat loss from a wall-face of the combustion chamber, due to an excessive advance in the combustion-start time, resulting in a decrease in the pressure as well as the temperature of the cylinder during the time period of the spark discharge.

With the engine control system according to the embodiment of the present invention, if Δt is longer than the determination-threshold Δtₖ, the normal combustion can be identified, and if Δt is shorter than the determination-threshold Δtₖ, the abnormal combustion can be identified in view of the description given as above. Further, in consideration of the viewpoint that occurrence of the pre-ignition precursory combustion, prior to the occurrence of the pre-ignition, as the precursor thereof, is a mechanism of usual abnormal combustion, if Δt is shorter than the determination-threshold Δtₖ, the abnormal combustion can be presumed as the pre-ignition precursory combustion. With the use of the integration value S of the ion-signals, it is also possible to identify a sporadic occurrence of the pre-ignition.

Further, in order to more accurately identify the combustion state of the engine, both Δt and S may be used. More specifically, the normal combustion and the abnormal combustion can be identified on the basis of Δt, and if identification on whether the abnormal combustion is the pre-ignition precursory combustion or the pre-ignition is made on the basis of the value S, this will enable accurate identification (discrimination) among the normal combustion, the pre-ignition precursory combustion, and the pre-ignition.

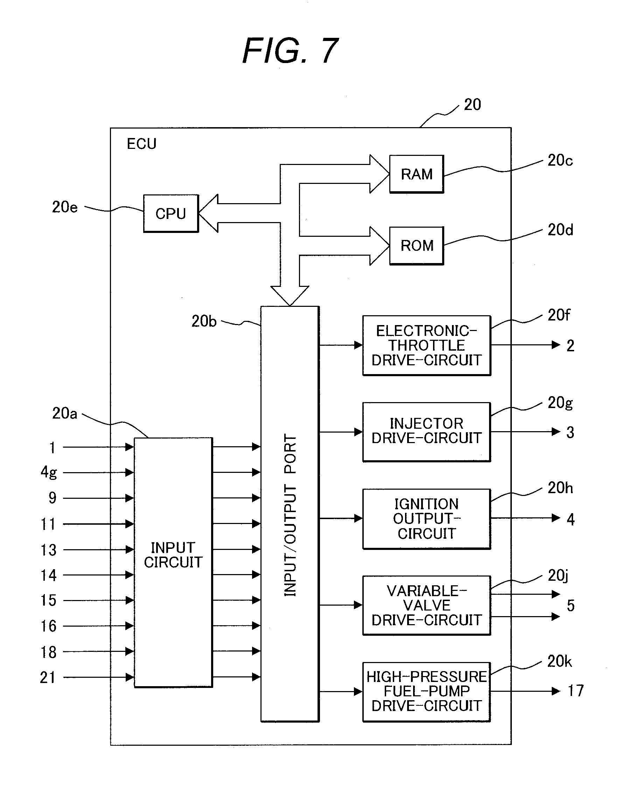

Fig. 7 is a block diagram showing an electrical configuration of the engine control system according to the embodiment of the present invention. Respective output signals from the air-flow sensor 1, the ion-signal 4g, the air fuel ratio sensor 9, the exhaust-gas temperature sensor 11, the crankshaft-angle sensor 13, the cooling-water temperature sensor 14, the intake-air temperature sensor 15, the accelerator-opening sensor 16, the fuel-pressure sensor 18, and the intake-pressure sensor 21 are delivered to an input circuit 20a of the ECU 20. However, input signals are not limited thereto. The input signals of the respective sensors, as delivered, are sent out to an input port inside an input/output port 20b. Values sent out to the input port 20b are saved in a RAM 20c to be subjected to the processing by a CPU. A control program with the contents thereof written therein is written in a ROM 20d beforehand.

Values showing actuation quantities of respective actuators, computed according to the control program, are saved in the RAM 20c to be subsequently sent out to an output port in the input/output port 20b before being delivered to the respective actuators via respective drive circuits. With the present embodiment, the drive-circuits include an electronic-throttle drive-circuit 20f, an injector drive-circuit 20g, an ignition output-circuit 20h, a variable-valve drive-circuit 20j, and a high-pressure fuel-pump drive-circuit 20k. The drive-circuits each control the electronic controlled throttle 2, the injector 3, the ignition system 4, the variable valve 5, and the high-pressure fuel pump 17, respectively. With the present embodiment, the system is provided with the respective drive-circuits, inside the ECU 20, however, the electrical configuration is not limited thereto, and the system may be provided with any of those drive-circuits, in the ECU 20.

The ECU 20 makes a determination on whether or not the abnormal combustion (the pre-ignition or the pre-ignition precursory combustion) exists on the basis of the input signal, and if it is determined that the abnormal combustion exists, the ECU 20 controls the ignition-time, the injector (a fuel injection volume), the variable valve, and the throttle opening.

Subsequently, there is described a representative embodiment of an engine control carried out with the use of the engine control system according to the embodiment described as above.

### Working Example 1

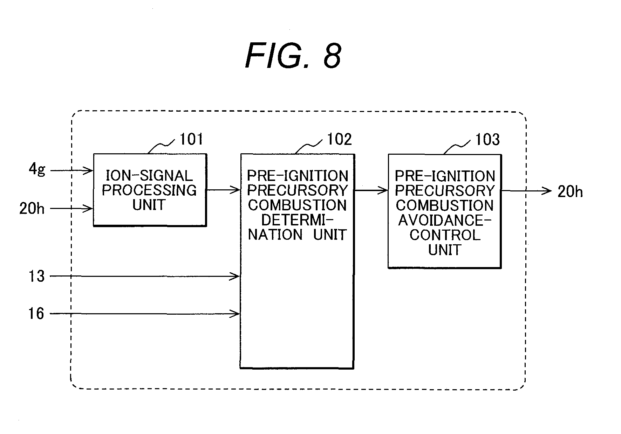

With Working Example 1, there is shown a configuration example for enabling a determination on pre-ignition precursory combustion to be made on the basis of a time-length Δt from the ignition-control-signal fall-time point to the ion-signal rise-time point to thereby control the engine in such a way as to avoid the pre-ignition precursory combustion. Working Example 1 is described in detail hereunder with reference to Figs. 8 through 10.

Fig. 8 is a view showing the gist of a determination on pre-ignition precursory combustion, and avoidance-control logic, according to Working Example 1. In order to carry out the determination on the pre-ignition precursory combustion, and the avoidance control of the pre-ignition precursory combustion, the ECU 20 is provided with an ion-signal processing unit 101, a pre-ignition precursory combustion determination unit (combustion-state determination unit) 102, and a pre-ignition precursory combustion avoidance-control unit (abnormal-combustion avoidance-control unit) 103. The ion signal 4g and the ignition-control signal 20h are delivered to the ion-signal processing unit 101, and then computation of the time-length Δt from the ignition-control signal fall-time point to the ion-signal rise-time point is executed, as shown in Fig. 4.

The output signals from the crankshaft angle sensor 13, and the accelerator-opening sensor 16, respectively, besides the time-length Δt as computed by the ion-signal processing unit 101, are delivered to the pre-ignition precursory combustion determination unit 102. Herein, the determination-threshold Δtₖ of the pre-ignition precursory combustion is computed on the basis of the engine speed Ne, as computed from the output signal delivered from the crankshaft angle sensor 13, and an engine torque T (a load), as estimated from the output signal of the accelerator-opening sensor 16.

Then, whether or not the pre-ignition precursory combustion has occurred is determined by comparing the present Δt with the determination-threshold Δtₖ, and the result of a determination is outputted to the pre-ignition precursory combustion avoidance-control unit 103. In this case, the engine torque is estimated from the output of the accelerator-opening sensor 13, however, the present embodiment is not limited thereto, and the engine torque may be estimated on the basis of a throttle opening 2, the output of the intake-pressure sensor 21, etc. Further, in this case, the determination-threshold Atₖ is computed by use of both the engine speed, and the engine torque, as computed, however, the determination-threshold Δtₖ may be computed by use of either the engine speed or the engine torque.

The result of the determination made on the pre-ignition precursory combustion is delivered to the pre-ignition precursory combustion avoidance-control unit 103, and if the pre-ignition precursory combustion has occurred, a command value is given to the ignition output-circuit 20h in order to retard an ignition-time so as to be behind the present ignition-time as set in an attempt to avoid the pre-ignition precursory combustion. If the pre-ignition precursory combustion has not occurred, the present setting is maintained.

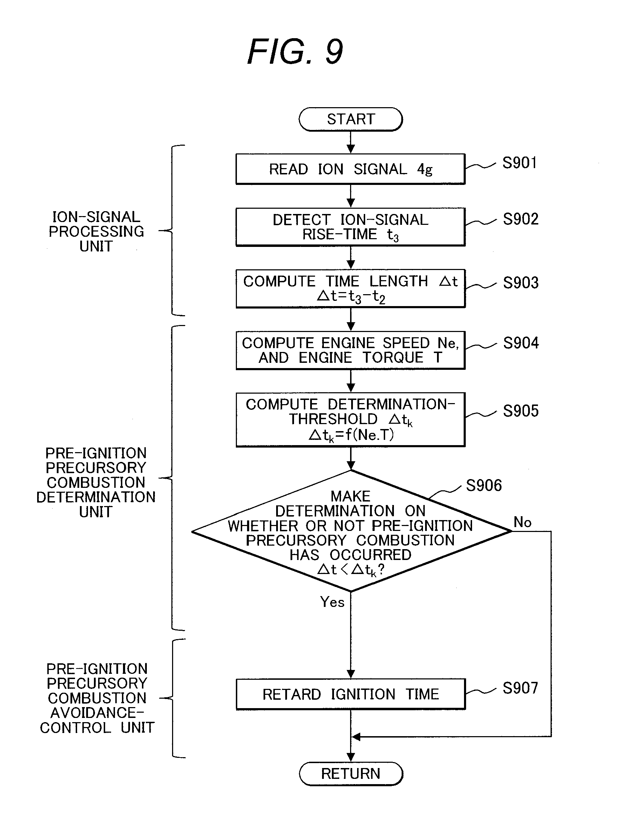

Fig. 9 is a flow chart showing a procedure for the determination on the pre-ignition precursory combustion, and avoidance-control, according to Working Example 1. The ECU 20 repeatedly carries out the procedure for control, shown in Fig. 9, in a predetermined cycle.

In step S901, the ECU 20 reads the ion-signal 4g. Next, in step S902, the ECU 20 detects the ion-signal rise-time point (the time t₃ in Fig. 4). More specifically, the ECU 20 detects a time when the ion-signal exceeds a predetermined value for the first time after the ignition-time. The predetermined value is stored in the ROM 20d beforehand. Subsequently, the process proceeds to step S903 to compute the time-length Δt from the ignition-control signal fall-time point t₂ to the ion-signal rise-time point t₃. The processing up to this point in time is executed by the ion-signal processing unit 101.

Next, the process proceeds to step S904 to compute the engine speed Ne, and the engine torque T. The engine speed Ne is computed from the output of the crankshaft angle sensor 13. The engine torque T is estimated from the output of the accelerator-opening sensor 16. Subsequently, in step S905, the determination-threshold Δtₖ is computed from the engine speed Ne and the engine torque T. The determination-threshold Δtₖ may be stored in the form of a map with two axes, representing the engine speed Ne, and the engine torque T, respectively, the map being built in the ROM 20d beforehand.

Furthermore, because the time-length Δt is under the influence of aged deterioration due to degradation and so forth, occurring to the ignition plug, and the ignition coil, it is more preferable to apply a learning control whereby the determination-threshold Δtₖ is corrected by use of a time-length Δt at the time of the normal combustion. In this connection, a determination on whether or not the combustion state is the normal combustion can be made on the basis of, for example, the intake-air temperature of the engine or the cooling-water temperature of the engine. More specifically, if the intake-air temperature of the engine is at a predetermined temperature or lower, or the cooling-water temperature of the engine is at a predetermined temperature or lower, it is determined that the combustion state is the normal combustion. Further, if the intake-air humidity of the engine is at a predetermined humidity or lower, it may be determined that the combustion state is the normal combustion.

Next, in step S906, a time-length Δt in value, as computed by the ion-signal processing unit 101, is compared with the determination-threshold Δtₖ. If Δt > Δtₖ, it is determined that the pre-ignition precursory combustion has not occurred (in other words, the case of the normal combustion), thereby completing a series of controls. If Δt < Δtₖ, it is determined that the pre-ignition precursory combustion has occurred, and then the process proceeds to step S907. The processing up to this point is executed by the pre-ignition precursory combustion determination unit 102.

Subsequently, the ignition-time is retarded in step S907 in an attempt to avoid the pre-ignition precursory combustion, thereby completing the series of controls. This part of the processing is executed by the pre-ignition precursory combustion avoidance-control unit 103. With Working Example 1, the temperature inside the combustion chamber is lowered by retarding the ignition-time, for the purpose of the pre-ignition precursory combustion avoidance-control. Otherwise, the fuel injection volume may be increased to thereby lower the temperature of the air-fuel mixture. Retardation of the ignition-time has an advantage in that the exhaust gas will not be adversely affected although the torque will decrease (power will be down). On the other hand, an increase in the fuel injection volume has an advantage in that the torque does not decrease (power does not decrease) although there will be some concern with effects on the exhaust gas. Further, both the retardation of the ignition-time may be used, and the increase in the fuel injection volume.

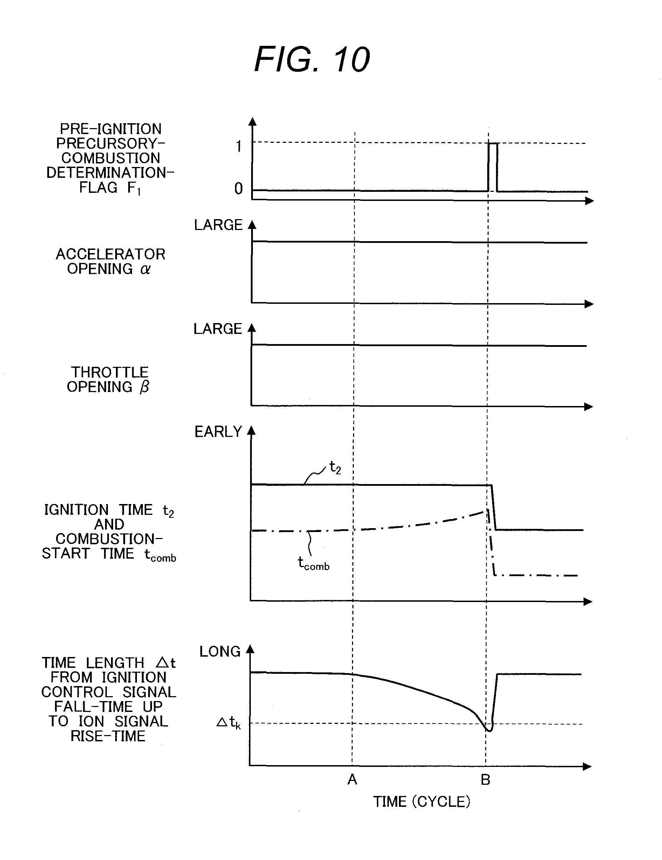

Fig. 10 shows a time chart for pre-ignition precursory combustion determination, and avoidance-control, according to Working Example 1. There is shown variation accompanying a lapse of time (cycle) with respect to a pre-ignition precursory-combustion determination-flag F₁, an accelerator opening α, a throttle opening β, an ignition-time t₂ and a combustion-start time t_{Comb}, and a time-length Δt from the ignition-control signal fall-time to the ion signal rise-time, respectively, as depicted in this order by starting from the top in the figure. The threshold Δtₖ for the determination on the pre-ignition precursory combustion is also depicted in a chart for Δt. In this case, a steady driving mode under a high-toque condition with the accelerator opening α kept constant is assumed. Further, the combustion-start time t_{Comb} being a parameter which the ECU 20 is unable to detect onboard, t_{Comb} is listed for reference purposes.

The combustion was normally underway prior to a time (cycle) A, and the combustion started after a constant time-period from the ignition-time t₂, in which case, Δt indicates a constant value. If the combustion chamber becomes higher in temperature at the time (cycle) A for any reasons including a rise in the temperature of an engine wall, a rise in the intake-air temperature, etc. , the combustion-start time t_{Comb}, is gradually brought forward at the time (cycle) A, or later, so that the combustion-start time t_{Comb} is brought closer to the ignition-time t₂. At this point in time, Δt becomes shorter in length as a result of advance in the combustion-start time t_{Comb}. If Δt becomes smaller in value than the determination-threshold Δtₖ at a time (cycle) B, it is determined that the combustion state is the pre-ignition precursory combustion, and the pre-ignition precursory-combustion determination-flag F₁ rises. As soon as the pre-ignition precursory-combustion determination-flag F₁ rises, retardation control of the ignition-time t₂ is executed. The advance in the combustion-start time t_{Comb} is avoided after the retardation control of the ignition-time t₂ is executed, and then a stable and normal combustion state is restored.

If the pre-ignition precursory combustion as the pre-ignition precursory phenomenon is reliably detected, and avoidance control is executed in that stage by use of a detection and control method according to Working Example 1, described as above, this will enable the pre-ignition to be avoided without causing deterioration in drivability, and damage occurring to the engine. In this case, since it is unnecessary to install two or more units of the ignition systems 4, each thereof being provided with the ion-current detection circuit (4-2), inside one unit of the combustion chamber 12, there is no need for a change in the layout of the combustion chamber of the engine, in addition to gaining the merit of substantial reduction in cost.

### Working Example 2

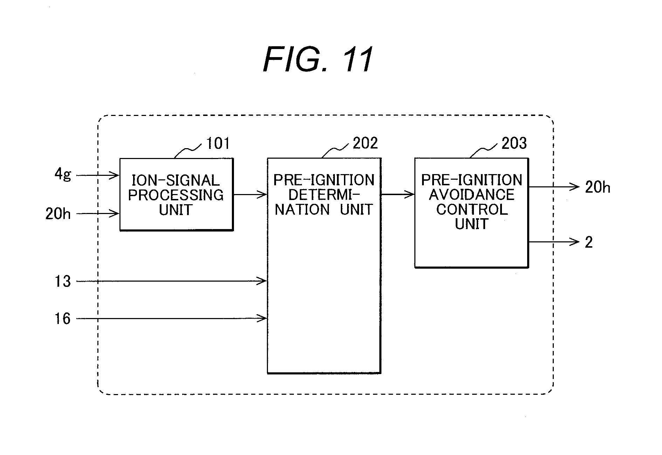

With Working Example 2, there is shown a configuration example for enabling differentiation to be made between the pre-ignition precursory combustion and the pre-ignition on the basis of the time-length Δt from the ignition-control signal fall-time point to the ion-signal rise-time point, and the integration value S of the ion-signals to thereby make a determination and control the engine in such a way as to avoid the pre-ignition precursory combustion or the pre-ignition. Working Example 2 is described in detail hereunder with reference to Figs. 11 through 13.

Fig. 11 is a view showing the gist of the determination on the pre-ignition precursory combustion, and avoidance-control logic, according to Working Example 2. In order to make a determination by differentiating between the pre-ignition precursory combustion and the pre-ignition, thereby executing avoidance control of the pre-ignition precursory combustion or the pre-ignition on the basis of the determination, Working Example 2 is provided with a pre-ignition determination unit (combustion-state determination unit) 202, and a pre-ignition avoidance control unit (abnormal combustion avoidance control unit) 203, in place of the pre-ignition precursory combustion determination unit 102, and the pre-ignition precursory combustion avoidance-control unit 103, (refer to Fig. 8), respectively, according to Working Example 1.

The ion-signal 4g and the ignition-control signal 20h are delivered to the ion-signal processing unit 101, and then computation of the time-length Δt from the ignition-control signal fall-time point to the ion-signal rise-time point is executed, as shown in Fig. 4. Furthermore, computation of the integration value S of the ion-signals in a predetermined time period (for example, - 90 to 90 deg. ATDC) is carried out.

The output signals from the crankshaft angle sensor 13, and the accelerator-opening sensor 16, respectively, besides Δt and S, computed by the ion-signal processing unit 101, are delivered to the pre-ignition precursory combustion determination unit 202. Herein, the determination-threshold Δtₖ of the pre-ignition precursory combustion, and the determination-threshold Sₖ of the pre-ignition are computed on the basis of the engine speed Ne, as computed from the output signal delivered from the crankshaft angle sensor 13, and the engine torque T (the load), as estimated from the output signal of the accelerator-opening sensor 16.

Then, whether or not the pre-ignition precursory combustion or the pre-ignition has occurred is discriminately determined by comparison of the present value of Δt with the determination-threshold Δtₖ, and comparison of the integration value S at present with the determination-threshold Sₖ, and then the result of a determination is delivered to the pre-ignition avoidance control unit 202. In this case, the engine torque is estimated from the output signal of the accelerator-opening sensor 13. However, Working Example 2 is not limited thereto, and the engine torque may be estimated on the basis of the output of the throttle opening 2, and the output of the intake-pressure sensor 21, etc. Furthermore, in this case, the determination-threshold Δtₖ and the determination-threshold Sₖ are computed by use of both the engine speed, as computed, and the engine torque, however, the determination-thresholds may be computed by use of either the engine speed or the engine torque.

The result of the pre-ignition determination is delivered to the pre-ignition avoidance control unit 203. If the pre-ignition has occurred, a command value is given to the electronic-throttle drive-circuit 20f so as to cause the throttle opening to be less than the present setting in order to avoid the pre-ignition. If the pre-ignition precursory combustion has occurred, a command value is given to the ignition output-circuit 20h so as to cause the ignition-time to be retarded more than the present setting in order to avoid the pre-ignition precursory combustion. Furthermore, if neither the pre-ignition nor the pre-ignition precursory combustion has occurred, it is determined that the combustion state is the normal combustion, maintaining therefore the present settings.

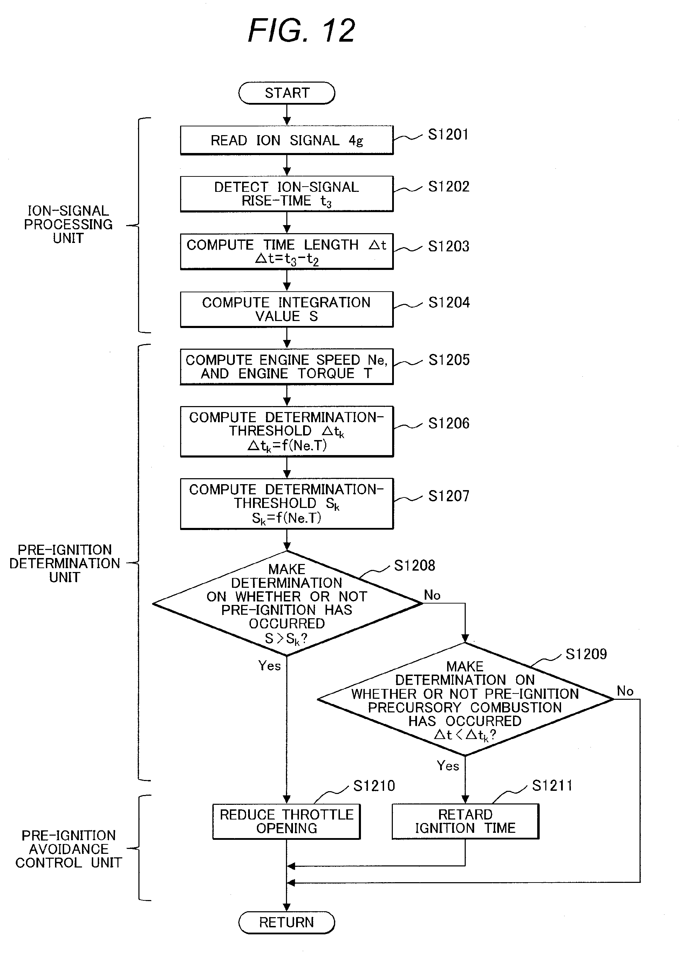

Fig. 12 is a flow chart showing a procedure for pre-ignition determination, and avoidance-control, according to Working Example 2. The ECU 20 repeatedly carries out the procedure for control, shown in Fig. 12, in a predetermined cycle.

In step S1201, the ECU 20 reads the ion-signal 4g. Next, in step S1202, the ECU 20 detects the ion-signal rise-time point (the time t₃ in Fig. 4). More specifically, the ECU 20 detects a time when the ion-signal exceeds a predetermined value for the first time after the ignition-time. The predetermined value is stored in the ROM 20d beforehand. Subsequently, the process proceeds to step S1203 to compute a time-length Δt from the ignition-control signal fall-time point t₂ to the ion-signal rise-time point t₃. Then, the process proceeds to step S1204 to compute the integration value S of the ion-signals. More specifically, an ion-signal value in a predetermined time period (for example, - 90 to 90 deg. ATDC) is computed. The processing up to this point is executed by the ion-signal processing unit 101.

Subsequently, the process proceeds to step S1205 to compute an engine speed Ne, and an engine torque T. The engine speed Ne is computed from the output of the crankshaft-angle sensor 13. The engine torque T is estimated from the output of the accelerator-opening sensor 16. Subsequently, in step S1206, the determination-threshold Δtₖ is computed from the engine speed Ne and the engine torque T. The determination-threshold Δtₖ may be stored in the form of a map with two axes, representing the engine speed Ne, and the engine torque T, respectively, the map being built in the ROM 20d beforehand.

Further, because the time-length Δt is under the influence of aged deterioration due to degradation and so forth, occurring to the ignition plug, and the ignition coil, it is more preferable to apply a learning control whereby the determination-threshold Δtₖ is corrected by use of the time-length Δt at the time of the normal combustion. Herein, it need only be sufficient to determine whether or not the combustion state is the normal combustion by use of the same technique as in the case of Working Example 1.

Next, in step S1207, a determination-threshold Sₖ is computed from the engine speed Ne, and the engine torque T. The determination-threshold Sₖ may be stored in the form of the map with two axes, representing the engine speed Ne, and the engine torque T, respectively, the map being built in the ROM 20d beforehand. Further, because S is under the influence of aged deterioration due to degradation and so forth, occurring to the ignition plug, and the ion-current detection circuit (4-2), it is more preferable to apply the learning control whereby the determination-threshold Sₖ is corrected by use of the integration value S at the time of the normal combustion. Herein, it need only be sufficient to determine whether or not the combustion state is the normal combustion by use of the same technique as in the case of Working Example 1.

Subsequently, in step S1208, S computed by the ion-signal processing unit 101 is compared with the determination-threshold Sₖ. If S > Sₖ, it is determined that the pre-ignition has occurred, and then the process proceeds to step S1210. If S < Sₖ, it is determined that the pre-ignition has not occurred, and then the process proceeds to step S1209. In the step S1209, Δt computed by the ion-signal processing unit 101 is compared with the determination-threshold Δtₖ. If Δt > Δtₖ, it is determined that the pre-ignition precursory combustion has not occurred (in other words, the case of the normal combustion), thereby completing a series of controls. If Δt < Δtₖ, it is determined that the pre-ignition precursory combustion has occurred, and then the process proceeds to step S1211. The processing up to this point is executed by the pre-ignition determination unit 202.

If it is determined that the pre-ignition has occurred in step 1208, the throttle opening is reduced in an attempt to avoid the pre-ignition in the step 1207, thereby completing a series of controls. Further, if it is determined that the pre-ignition precursory combustion has occurred in the step 1209, the ignition-time is retarded in step S1211 in an attempt to avoid the pre-ignition precursory combustion, thereby completing a series of controls. This processing is executed by the pre-ignition avoidance control unit 203.

Furthermore, the order in which the steps 1208, 1209 each execute processing may be reversed. More specifically, discrimination between the normal combustion and the abnormal combustion may be first executed on the basis of the time-length Δt in value. If the abnormal combustion is discriminated on, a determination on whether the abnormal combustion is the pre-ignition precursory combustion or the pre-ignition may be executed on the basis of the S value, in the next step.

With Working Example 2, an air-fuel mixture volume is reduced by decreasing the throttle opening for the purpose of the avoidance control of the pre-ignition, however, besides the avoidance control, temperature in the combustion chamber may be lowered by retarding a time when the intake-valve of the engine is closed to thereby cause the effective compression ratio to be decreased, or both a decrease in the throttle opening, and retardation of an intake-valve closure-time may be used.

Still further, for the purpose of the avoidance control of the pre-ignition precursory combustion, the temperature in the combustion chamber is lowered by retarding the ignition-time, however, besides this avoidance control, an air-fuel mixture temperature may be lowered by increasing the fuel injection volume, or both retardation of the ignition-time and an increase in the fuel injection volume may be used.

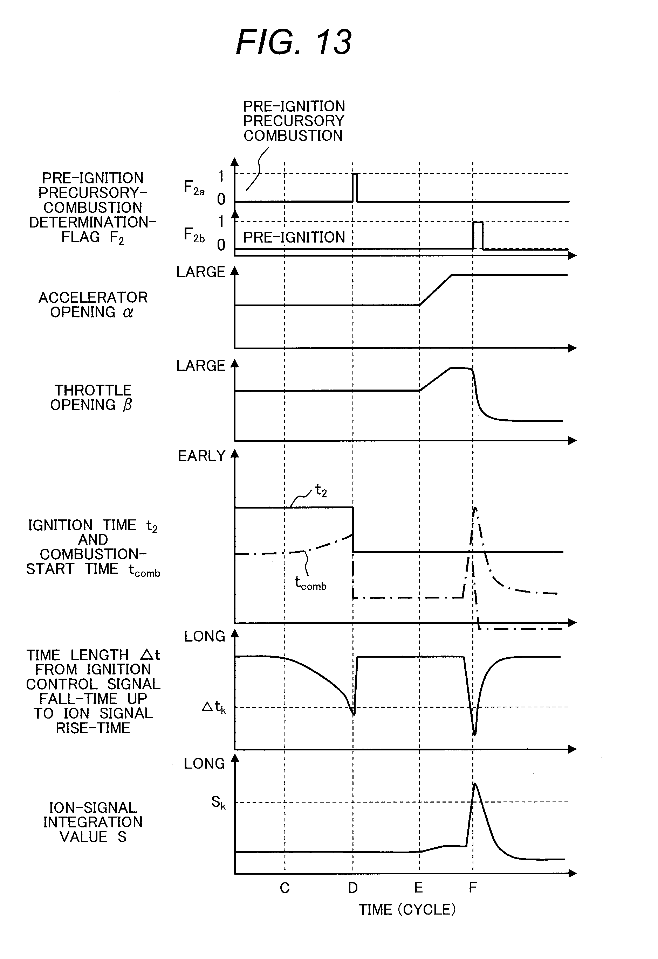

Fig. 13 shows a time chart for pre-ignition determination, and avoidance-control, according to Working Example 2. There is shown variation accompanying a lapse of time (cycle) with respect to an abnormal combustion determination flag F₂, an accelerator opening α, a throttle opening β, an ignition-time t₂ and a combustion-start time t_{Comb}, a time-length Δt from the ignition-control signal fall-time to the ion-signal rise-time, and an integration value S of the ion-signals in a predetermined time period, respectively, as depicted in this order by starting from the top in the figure. In a chart for Δt and S, there are depicted both the threshold Δtₖ for the determination on the pre-ignition precursory combustion, and the determination-threshold Sₖ for the pre-ignition.

In this case, there is assumed a full-pedal-depression state as a driver intends to accelerate at a point in time, (cycle) E. Further, the combustion-start time t_{Comb} being the parameter which the ECU 20 is unable to detect onboard, t_{Comb} is listed simply for reference purposes.

Combustion was normally underway prior to a point in time, (cycle) C, and the combustion started with the elapse of a prescribed time period from the ignition-time t₂. In such a case, Δt and S each indicate a prescribed value. If the combustion chamber becomes higher in temperature at a point in time, (cycle) C, for any reason such as a rise in the temperature of an engine wall, a rise in the intake-air temperature, etc., the combustion-start time t_{Comb}, is gradually brought forward at a point in time, (cycle) C, or later, so that the combustion-start time t_{Comb} is brought closer to the ignition-time t₂. At this point in time, Δt becomes shorter as a result of advance in the combustion-start time t_{Comb}. At this time, S undergoes a small change.

If Δt becomes smaller than the determination threshold Δtₖ at a point in time, (cycle) D, it is determined that the combustion state is the pre-ignition precursory combustion, and then a pre-ignition precursory-combustion determination flag F₂ₐ will rise. As soon as the pre-ignition precursory-combustion determination flag F₂ₐ rises, retardation control of the ignition-time t₂ is executed. The advance in the combustion-start time t_{Comb} is avoided after the retardation control of the ignition-time t₂ is executed, and then a stable normal-combustion state is restored.

Thereafter, if the driver steps down on the pedal for acceleration at the point in time, (cycle) E, the ECU 20 will cause the throttle opening to be increased. If an abrupt increase in temperature inside the combustion chamber 12 takes place following such an increase in the engine torque, this will cause the combustion-start time t_{Comb} to be abruptly moved up, and then there is a possibility that the pre-ignition occurs without the combustion state being shifted through a stage of the pre-ignition precursory combustion. If the integration value S of the ion-signals increases at this point in time so as to be greater than the determination-threshold Sₖ for the pre-ignition at a point in time, (cycle) F, it is determined that the combustion state is the pre-ignition, and then a pre-ignition determination flag F_{2b} will rise. As soon as the pre-ignition determination flag F_{2b} rises, a decrease in the throttle opening β is executed, and after a control for the decrease in the throttle opening is executed, advance in the combustion-start time t_{Comb} is avoided due to a decrease in the engine torque, so that a stable and normal combustion state is restored.

If the pre-ignition precursory combustion and the pre-ignition are detected in stages, and respective avoidance controls suitable thereto are executed with the use of a detection and control method according to Working Example 2, as described in the foregoing, this will enable the pre-ignition to be avoided while controlling deterioration in drivability, and damage occurring to the engine to the minimum. Further, with Working Example 2 as well, it is unnecessary to install two or more units of the ignition systems 4, each thereof being provided with the ion-current detection circuit (4-2), inside one unit of the combustion chamber 12, so that there is no need for a change in the layout of the combustion chamber of the engine, in addition to gaining the advantage of a substantial reduction in cost.

### Working Example 3

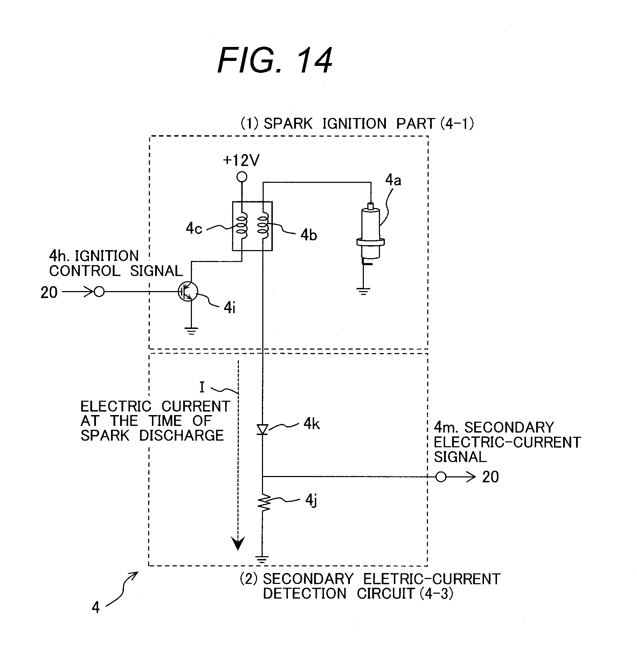

With Working Example 3, there is shown a configuration example in which a determination on the pre-ignition precursory combustion is made from a spark-discharge time-length Δt as detected from a secondary electric-current signal travelling through an ignition coil without the use of the ion-current detection circuit (4-2), unlike Working Example 1 and Working Example 2, respectively, and an engine is controlled in such a way as to avoid the pre-ignition precursory combustion on the basis of the determination. Working Example 3 is described in detail below with reference to Figs. 14 through 19.

Fig. 14 is a view showing an ignition system 4 as a constituent of the engine control system according to the present embodiment of the invention, in detail. The ignition system 4 is made up of a spark ignition part (4-1) and a secondary electric-current detection circuit (4-3). Upon an ignition-control signal 4h being delivered from the ECU 20, an electric current flows to a primary ignition coil 4c via an igniter 4i. At a time when the ignition-signal is turned OFF, and the electric current on the primary side is stopped, an electromotive force is generated at a secondary ignition coil 4b, and a high voltage is impressed to the respective tips of ignition plugs 4a, thereby causing a spark discharge to occur. At the time of the spark discharge, an electric current (a secondary electric current) flows in a direction indicated by the arrow I in Fig. 14. The secondary electric current has its voltage converted by a secondary electric-current detection-resistor 4 j to be subsequently sent out as a secondary electric-current signal 4m to the ECU 20.

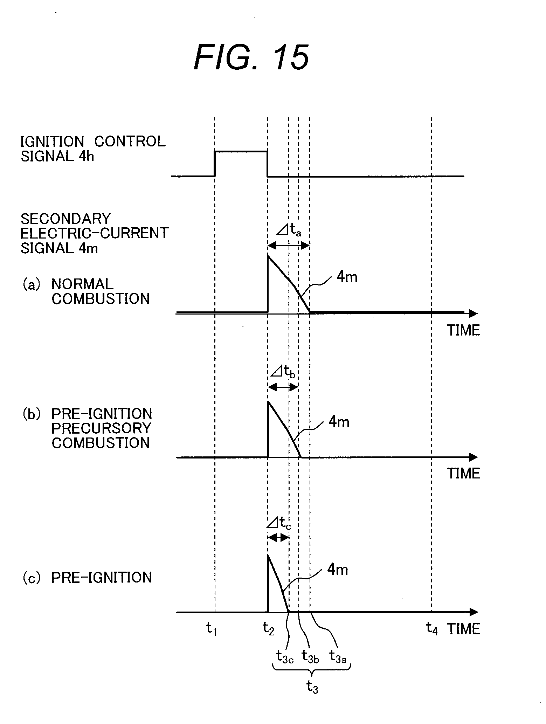

A test was conducted on the engine shown in Fig. 1, and Fig. 15 is a view showing a relationship between an ignition-control signal and the secondary electric-current signal after an elapse of time on the basis of data of the test. With respect to the secondary electric-current signal 4m, there are shown examples thereof at the time of the normal combustion, at the time of the pre-ignition precursory combustion, and at the time of the pre-ignition, respectively, as is the case with the heat release rate shown in Fig. 3. Fig. 15 shows the results of the test conducted on condition that the engine speed is 1000 rpm, the throttle position is fully open, and the effective compression ratio is 10. 3.

First, there is described a characteristic of the secondary electric-current signal 4m generated accompanying combustion at the time of (a) the normal combustion. The secondary electric-current signal 4m abruptly rises at a time t₂ (spark-discharge start-time) when an ignition-control signal 4h falls, thereby reaching the maximum value, while declining in value in the course of the spark-discharge. The secondary electric-current signal 4m is turned to 0 at t₃ₐ, indicating completion of the spark-discharge. That is, a time-length (Δtₐ) from a fall time t₂ of the ignition signal to the time t₃ₐ when the secondary electric-current signal 4m falls is spark-discharge time.

There is observed a tendency that the time-length Δt from the fall time t₂ of the ignition-control signal to the time t₃ (t₃ₐ, t_{3b}, t_{3c}) when the secondary electric-current signal falls becomes shorter in the order of the normal combustion, the pre-ignition precursory combustion, and the pre-ignition (Δtₐ > Δt_{b} > Δt_{c}). This is attributable to shortened spark-ignition time in the case of the pre-ignition precursory combustion as well as the pre-ignition, due to the rise in the pressure as well as the temperature in the gap between the ignition plugs during the spark discharge as described in the foregoing.

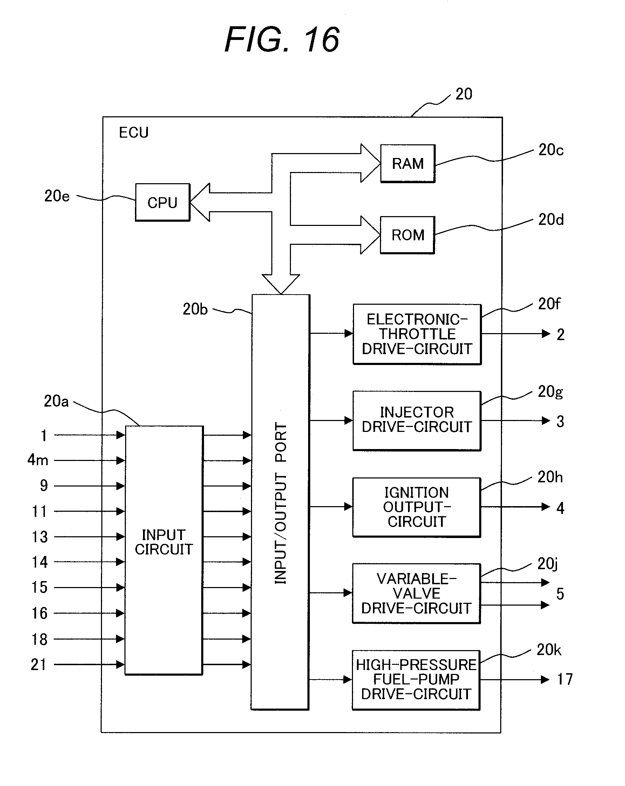

Fig. 16 is a block diagram showing an electrical configuration of the engine control system according to working example 3 of the present invention. Respective output signals from the air-flow sensor 1, the secondary electric-current signal 4m, the air-fuel ratio sensor 9, the exhaust-gas temperature sensor 11, the crankshaft-angle sensor 13, the cooling-water temperature sensor 14, the intake-air temperature sensor 15, the accelerator-opening sensor 16, the fuel-pressure sensor 18, and the intake-pressure sensor 21 are delivered to the input circuit 20a of the ECU 20. However, input signals are not limited thereto. The input signals of the respective sensors, as delivered, are sent out to the input port inside the input/output port 20b. Values sent out to the input port 20b are saved in the RAM 20c to be subjected to the processing by the CPU 20e. A control program with the contents of the processing, written therein, is written in the ROM 20d beforehand.

The values showing the actuation quantities of the respective actuators, as computed according to the control program, are saved in the RAM 20c to be subsequently sent out to the output port in the input/output port 20b before being delivered to the respective actuators via the respective drive circuits. With Working Example 3, the drive-circuits include the electronic-throttle drive-circuit 20f, the injector drive-circuit 20g, the ignition output-circuit 20h, the variable-valve drive-circuit 20j, and the high-pressure fuel-pump drive-circuit 20k. The drive-circuits each control the electronic controlled throttle 2, the fuel injector 3, the ignition system 4, the variable valve 5, and the high-pressure fuel pump 17, respectively. With Working Example 3, the system is provided with the respective drive-circuits, in the ECU 20, however, the electrical configuration is not limited thereto, and the system may be provided with any of those drive-circuits, in the ECU 20.

The ECU 20 makes a determination on whether or not the abnormal combustion (the pre-ignition or the pre-ignition precursory combustion) exists on the basis of the input signal, and if it is determined that the abnormal combustion exists, the ECU 20 controls the ignition-time, the injector (the fuel injection volume), the variable valve, and the throttle opening.

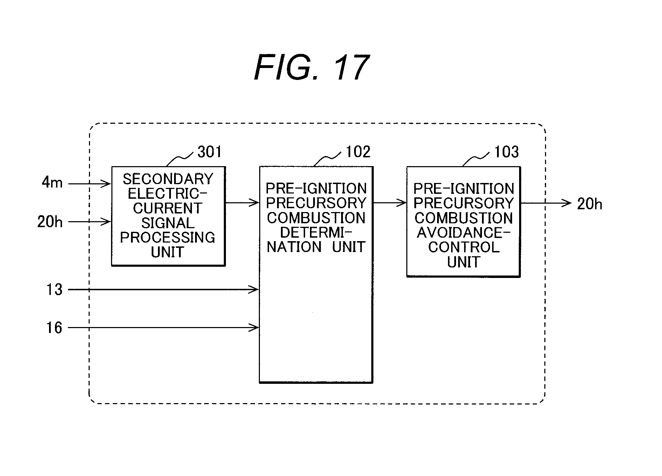

Fig. 17 is a view showing the gist of a determination on the pre-ignition precursory combustion, and the avoidance-control logic, according to Working Example 3. In order to carry out the determination on the pre-ignition precursory combustion, and the avoidance control of the pre-ignition precursory combustion, the ECU 20 is provided with a secondary electric-current signal processing unit 301, the pre-ignition precursory combustion determination unit (combustion-state determination unit) 102, and the pre-ignition precursory combustion avoidance-control unit (abnormal-combustion avoidance-control unit) 103. The secondary electric-current signal 4m and the ignition-control signal 20h are delivered to the secondary electric-current signal processing unit 301, and then computation of the time-length Δt from the ignition-control signal fall-time point to the secondary electric-current signal fall-time point is executed, as shown in Fig. 15.

The output signals from the crankshaft angle sensor 13, and the accelerator-opening sensor 16, respectively, besides the time-length Δt as computed by the secondary electric-current signal processing unit 301, are delivered to the pre-ignition precursory combustion determination unit 102. Herein, the determination-threshold Δtₖ of the pre-ignition precursory combustion is computed on the basis of the engine speed Ne, as computed from the output signal delivered from the crankshaft angle sensor 13, and the engine torque T (the load), as estimated from the output signal of the accelerator-opening sensor 16.

Then, a determination on whether or not the pre-ignition precursory combustion has occurred is made by comparing the present Δt with the determination-threshold Δtₖ, and the result of the determination is outputted to the pre-ignition precursory combustion avoidance-control unit 103. In this case, the engine torque is estimated from the output of the accelerator-opening sensor 13, however, Working Example 3 is not limited thereto, and the engine torque may be estimated on the basis of a throttle opening 2, the output of the intake-pressure sensor 21, etc. Further, in this case, the determination-threshold Δtₖ is computed by use of both the engine speed, as computed, and the engine torque, however, the determination-threshold Δtₖ may be computed by use of either the engine speed or the engine torque.

The result of the determination made on the pre-ignition precursory combustion is outputted to the pre-ignition precursory combustion avoidance-control unit 103, and if it is determined that the pre-ignition precursory combustion has occurred, a command value is given to the ignition output-circuit 20h in order to retard an ignition-time so as to be behind the present ignition-time as set in an attempt to avoid the pre-ignition precursory combustion. If it is determined that the pre-ignition precursory combustion has not occurred, the present setting is maintained.

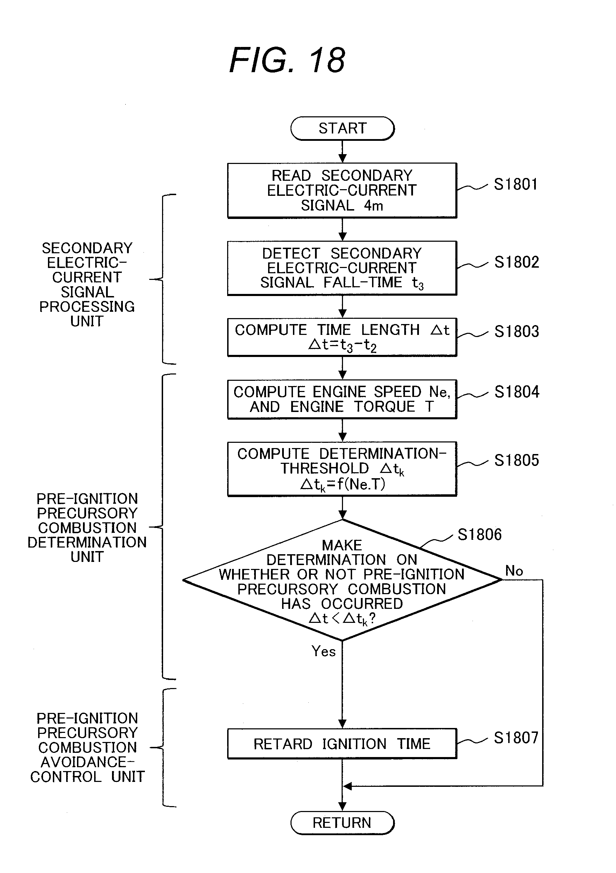

Fig. 18 is a flow chart showing a procedure for the determination on the pre-ignition precursory combustion, and avoidance-control, according to Working Example 3. The ECU 20 repeatedly carries out the procedure for control, shown in Fig. 18, in a predetermined cycle.

In step S1801, the ECU 20 reads the secondary electric-current signal 4m. Next, in step S1802, the ECU 20 detects a secondary electric-current signal fall-time point (the time t₃ in Fig. 15). More specifically, the ECU 20 detects a time when the secondary electric-current signal declines below a predetermined value for the first time after the ignition-time. The predetermined value is stored in the ROM 20d beforehand. Subsequently, process proceeds to step a S1803 to compute a time-length Δt from the ignition-control signal fall-time point t₂ up to the secondary electric-current signal fall-time point t₃. The processing up to this point in time is executed by the secondary electric-current signal processing unit 301.

Next, the contents of the processing from step S1804 to step 1807 (the pre-ignition precursory combustion determination unit, and the pre-ignition precursory combustion avoidance-control unit) are the same as shown in Fig. 9 (Working Example 1).

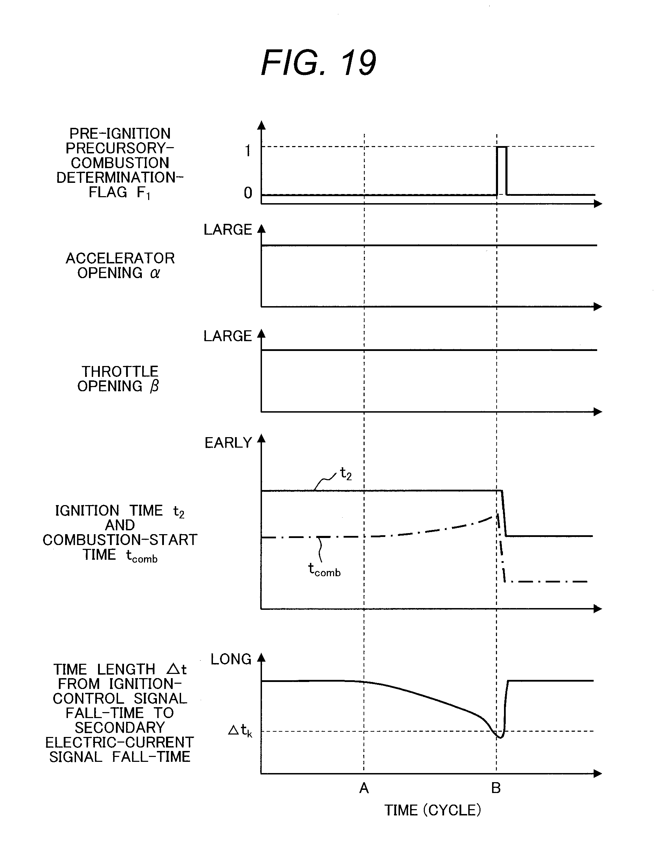

Fig. 19 shows a time chart for the pre-ignition precursory combustion determination, and avoidance-control, according to Working Example 3. There is shown variation accompanying a lapse of time (cycle) with respect to a pre-ignition precursory-combustion determination-flag F₁, an accelerator opening α, a throttle opening β, an ignition-time t₂ and a combustion-start time t_{Comb}, and a time-length Δt from the ignition-control signal fall-time to a secondary electric-current signal fall-time, respectively, as depicted in this order by starting from the top in the figure. The threshold Δtₖ for the determination on the pre-ignition precursory combustion is also depicted in a chart for Δₜ. In this case, a steady driving mode under a high-torque condition with the accelerator opening α kept constant is assumed. Further, the combustion-start time t_{Comb} being the parameter which the ECU 20 is unable to detect onboard, t_{Comb} is listed for reference purposes.

Combustion was normally underway prior to a time, (cycle) A, and the combustion started after a constant time from the ignition-time t₂, in which case, Δt indicates a constant value. If the combustion chamber becomes higher in temperature at the time, (cycle) A, for any reason such as a rise in the temperature of an engine wall, and a rise in the intake-air temperature, etc., the combustion-start time t_{Comb}, is gradually brought forward at the time (cycle) A, or later, so that the combustion-start time t_{Comb} is brought closer to the ignition-time t₂. At this point in time, Δt becomes shorter in length as a result of advance in the combustion-start time t_{Comb}. If Δt becomes smaller in value than the determination-threshold Δtₖ at a time (cycle) B, it is determined that the combustion state is the pre-ignition precursory combustion, and the pre-ignition precursory-combustion determination-flag F₁ rises. As soon as the pre-ignition precursory-combustion determination-flag F₁ rises, the retardation control of the ignition-time t₂ is executed. The advance in the combustion-start time t_{Comb} is avoided after the retardation control of the ignition-time t₂ is executed, and then a stable and normal combustion state is restored.

If the pre-ignition precursory combustion as the precursory phenomenon of the pre-ignition is reliably detected, and avoidance control is executed in that stage by use of a detection and control method according to Working Example 3, described as above, this will enable the pre-ignition to be avoided without causing deterioration in drivability, and damage occurring to the engine. In this case, because a determination on the pre-ignition precursory combustion is enabled simply by adding the secondary electric-current detection circuit (secondary electric-current detection-resistor) to a traditional ignition system, there is no need for a change in the layout of the combustion chamber of the engine, in addition to gaining the advantage of a substantial reduction in cost.

With Working Example 3 of the present invention, the spark-discharge time-length is computed on the basis of the time-length Δt from the ignition-control signal fall-time point to the secondary electric-current signal fall-time point, however, even if a time-length from the secondary electric-current signal rise-time point to the secondary electric-current signal fall-time point is alternatively adopted as the spark-discharge time-length Δt, the same result can be obtained.

Still further, with Working Example 3 of the present invention, the spark-discharge time-length Δt is computed from the secondary electric-current signal, however, even if the spark-discharge time-length Δt is computed from other parameters related to the ignition system, such as a secondary-voltage, and so forth, the same result can be obtained.

Now, it is to be pointed out that the embodiment of the invention, and Working Examples 1, 2, 3, described in the foregoing, are presented for illustrative purposes only, and the invention be not limited thereto. Further, it is to be understood that modifications will be apparent to those skilled in the art without departing from the spirit of the invention.

### [List of Reference Signs]

4: ignition system
4 - 1: spark ignition part
4-2: ion-current detection circuit (ion detector)
4 - 3: secondary electric-current detection circuit (secondary electric-current detector)
4g: ion-signal
4h: ignition-control signal
4m: secondary electric-current signal
20: ECU (control unit)
100: engine
101: ion-signal processing unit
102: pre-ignition precursory combustion determination unit (combustion-state determination unit)
103:pre-ignitionprecursory combustion avoidance-control unit (abnormal-combustion avoidance-control unit)
202: pre-ignition determination unit (combustion-state determination unit)
203: pre-ignition avoidance control unit (abnormal-combustion avoidance-control unit)
301: secondary electric-current signal processing unit Δtₖ: determination-threshold (first threshold) of the pre-ignition precursory combustion
ΔSₖ : the determination-threshold (second threshold) of the pre-ignition

## Claims

1. A control system of a spark-ignition internal combustion engine for causing air-fuel mixture to be ignited by a spark-discharge with the use of an ignition plug, the control system comprising:
a combustion-state determination unit for determining whether a combustion state of the spark-ignition internal combustion engine is a normal combustion or an abnormal combustion on the basis of a time-length from a spark-discharge start-time point to a spark-discharge completion-time point of the spark-ignition internal combustion engine.

2. The control system,
wherein the spark-ignition internal combustion engine is provided with an ion detector for detecting an ion generated at the time of combustion, and
the spark-discharge completion-time point is based on a rise-time point of an ion-signal generated by the ion detector.

3. The control system according to claim 1,
wherein the combustion-state determination unit determines whether or not the abnormal combustion is a pre-ignition precursory combustion as a phenomenon of a pre-ignition, on the basis of the time-length.

4. The control system according to claim 3,
wherein the combustion-state determination unit determines that the abnormal combustion is a pre-ignition precursory combustion if the time-length is shorter than a first threshold.

5. The control system according to claim 4,
wherein the first threshold is computed on the basis of at least either of a torque of the spark-ignition internal combustion engine and an engine speed of the spark-ignition internal combustion engine.

6. The control system according to claim 3, further comprising an abnormal-combustion avoidance-control unit for controlling the spark-ignition internal combustion engine so as to avoid the abnormal combustion, wherein the abnormal-combustion avoidance-control unit controls the spark-ignition internal combustion engine so as to avoid the pre-ignition precursory combustion if the combustion-state determination unit determines that the abnormal combustion is the pre-ignition precursory combustion.

7. The control system according to claim 6,
wherein the abnormal-combustion avoidance-control unit avoids the pre-ignition precursory combustion by retarding an ignition-time of the spark-ignition internal combustion engine or by increasing a fuel injection volume to be supplied to the spark-ignition internal combustion engine.

8. The control system according to claim 4, further comprising a function for learning the time-length if the combustion-state determination unit determines that the combustion-state inside the spark-ignition internal combustion engine is the normal combustion, and correcting the first threshold on the basis of a time-length as learned.

9. The control system according to claim 2,
wherein the combustion-state determination unit determines whether the abnormal combustion is a pre-ignition precursory combustion as a precursory phenomenon of a pre-ignition or the pre-ignition on the basis of the time-length and an energy value of the ions detected by the ion detector.

10. The control system according to claim 9,
wherein the combustion-state determination unit determines that the abnormal combustion is the pre-ignition if the energy value of the ions is greater than a second threshold.

11. The control system according to claim 9,
wherein the combustion-state determination unit determines that the abnormal combustion is the pre-ignition precursory combustion if the time-length is shorter than the first threshold, and the energy value of the ions is smaller than the second threshold, while determining that the abnormal combustion is the pre-ignition if the energy value of the ions is greater than the second threshold.

12. The control system according to claim 10,
wherein the ion energy value of the ions is any selected from among an integration value of the ion-signal, a time period over which the ion-signal was detected, and the peak value of the ion-signal.

13. The control system according to claim 11,
wherein the first threshold and the second threshold each are computed on the bass of at least either of a torque of the spark-ignition internal combustion engine and an engine speed of the spark-ignition internal combustion engine.

14. The control system according to claim 9, further comprising an abnormal-combustion avoidance-control unit for controlling the spark-ignition internal combustion engine so as to avoid the abnormal combustion,
wherein the abnormal-combustion avoidance-control unit controls the spark-ignition internal combustion engine so as to avoid the pre-ignition precursory combustion if the combustion-state determination unit determines that the abnormal combustion is the pre-ignition precursory combustion, whereas the abnormal-combustion avoidance-control unit controls the spark-ignition internal combustion engine so as to avoid the pre-ignition if the combustion-state determination unit determines that the abnormal combustion is the pre-ignition.

15. The control system according to claim 14,
wherein if the combustion-state determination unit determines that the abnormal combustion is the pre-ignition, the abnormal-combustion avoidance-control unit avoids the pre-ignition by decreasing a throttle opening of the spark-ignition internal combustion engine or by retarding a time for closing an intake-valve of the spark-ignition internal combustion engine.
